# EUROPEAN PATENT APPLICATION

(11) **EP 2 019 372 A2**
(43) Date of publication of application: **28.01.2009**
(21) Application number: 08159665.2
(22) Date of filing: 03.07.2008
(51) Int. Cl.: G06Q 20/00

(54) **Broadcast program purchase method and apparatus for broadcast-enabled mobile device**

(30) Priority: 25.07.2007 KR 20070074454
(71) Applicant: Samsung Electronics Co., Ltd., Suwon-si, Gyeonggi-Do (KR)
(72) Inventor: Choi, Jun Yong, Gyeonggi-do (KR)
(74) Representative: Harrison Goddard Foote

(57) **Abstract**

A broadcast program purchase method and apparatus for a broadcast-enabled mobile device are provided for efficiently managing purchased tokens by using a smartcard. In the broadcast program purchase method one or more tokens are acquired for use in purchasing a pay broadcast program and the one or more tokens are stored in a smartcard coupled to the mobile device. The broadcast program purchase apparatus includes a radio communication unit for transmitting a token acquisition request message and a program purchase request message to a billing server and for receiving one or more tokens from the billing server, a smartcard unit for storing the one or more tokens received from the billing server, and a control unit for controlling transmission of the program purchase request message using at least one of the one or more tokens through the radio communication unit.

## Description

### BACKGROUND OF THE INVENTION

### 1. Field of the Invention:

The present invention relates to a mobile broadcast service. More particularly, the present invention relates to a broadcast program purchase method and apparatus for a broadcast-enabled mobile device that is capable of effectively managing tokens when purchasing a broadcast program by using a smartcard.

### 2. Description of the Related Art:

A digital broadcast receiver is an apparatus that restores original digital data from a broadcast signal transmitted by a broadcast station. The digital data is coded and modulated to be broadcasted in the form of a broadcast signal by the broadcast station. The digital broadcast receiver demodulates and decodes the broadcast signal for restoring the original digital data. Accordingly, the digital broadcast receiver is provided with a tuner, a demodulator, and a decoder. Recent digital broadcast systems are classified into a digital multimedia broadcast (DMB) system and a digital video broadcasting (DVB) system.

These digital broadcast systems provide a plurality of service channels in a given frequency bandwidth and each service channel is structured with multiplexed sub-channels of video, audio, and program information data.

With the popularity of mobile devices supporting mobile broadcast services such as DVB-Handheld (DVB-H) and DMB, various broadcast content purchasing techniques have been proposed. A token-based subscription is one of the proposed methods for purchasing content.

However, no standardized token management method has been specified yet. Accordingly, there is a need for an effective and reliable token management method.

### SUMMARY OF THE INVENTION

An aspect of the present invention is to address the above-mentioned problems and/or disadvantages and to provide at least the advantages described below. Accordingly, an aspect of the present invention is to provide a pay broadcast program purchase method and apparatus for a mobile device that is capable of effectively managing tokens using a separate module.

In accordance with an aspect of the present invention, a broadcast program purchase method for a mobile device is provided. The method includes acquiring one or more tokens for use in purchasing a pay broadcast program, and storing the one or more tokens in a smartcard coupled to a mobile device.

In accordance with another aspect of the present invention, a broadcast program purchase apparatus of a mobile device is provided. The apparatus includes a radio communication unit for transmitting one of a token acquisition request message and a program purchase request message to a billing server and for receiving one or more tokens from the billing server a smartcard unit for storing the one or more tokens received from the billing server and a control unit for controlling transmission of the program purchase request message using at least one of the one or more tokens through the radio communication unit.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a block diagram illustrating a configuration of a mobile device according to an exemplary embodiment of the present invention;

FIG. 2 is a schematic diagram illustrating a broadcast program purchase system according to an exemplary embodiment of the present invention;

FIG. 3 is a flowchart illustrating a broadcast program purchase method according to an exemplary embodiment of the present invention; and

FIG. 4 is a flowchart illustrating a pay broadcast program purchase procedure of FIG. 3.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In the following description, content of the 3^{rd} Generation Partnership Project (3GPP) Technical Specifications may be referred to as an example. However, the present invention is not limited thereto.

Although the broadcast program purchase method and apparatus is described in association with the DVB-H system as an example in the following description, the present invention is not limited thereto. For example, the broadcast program purchase method and apparatus can be applied to other mobile broadcast systems such as a DMB system, MediaFLO system and the like.

In the following description, the mobile device can be any of a dedicated digital broadcast receiver, a Personal Digital Assistant (PDA), a Smartphone, a Code Division Multiple Access (CDMA) terminal, a International Mobile Telecommunication 2000 (IMT-2000) communication terminals including Wideband CDMA (WCDMA) and CDMA2000 terminals, and their equivalents that support broadcast service applications and smartcards.

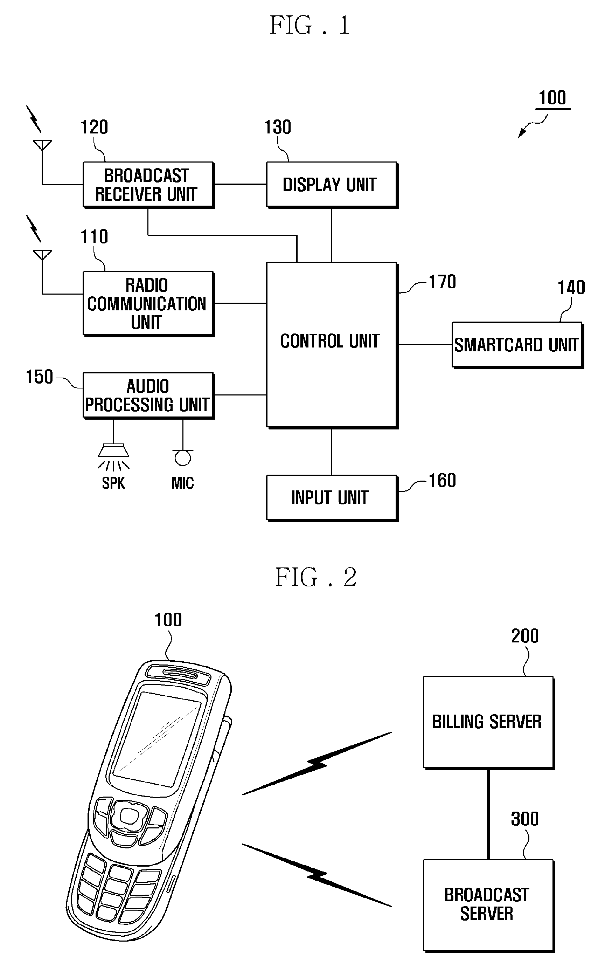

FIG. 1 is a block diagram illustrating a configuration of a mobile device according to an exemplary embodiment of the present invention.

Referring to FIG. 1, a mobile device 100 includes a radio communication unit 110, a broadcast receiver unit 120, a display unit 130, a smartcard unit 140, an audio processing unit 150, an input unit 160, and a control unit 170.

The RF unit 110 is responsible for radio communication of the mobile device with a mobile communication network. The radio communication unit 110 includes a Radio Frequency (RF) module and a baseband module. The RF module includes an RF transmitter for up-converting and amplifying signals to be transmitted and an RF receiver for low noise amplifying and down-converting received signals. The baseband module performs channel coding and interleaving on the transmission signals and outputs the coded and interleaved transmission signals to the RF module. The baseband module also performs demodulation, equalization, channel decoding, and deinterleaving on the received signals supplied from the RF module.

The radio communication unit 110 transmits a token request message under the control of the control unit 170 and forwards a token received in response to the token request message to the control unit 170.

The broadcast receiver unit 120 receives digital broadcast data. The broadcast receiver unit 120 tunes to a physical channel for receiving broadcast data on the physical channel. More particularly, the broadcast receiver unit 120 receives broadcast data of a service channel and extracts video and audio data and program information from the broadcast data.

In the case of DVB-H, the broadcast receiver unit 120 receives the broadcast data using a time slicing technique and extracts a Transport Stream (TS) from the broadcast data. Next, the broadcast receiver unit 120 performs an error correction, i.e. Multiprotocol Encapsulation-Forward Error Correction (MPE-FEC) or the like and then extracts an Internet Protocol (IP) version 6 (IPv6) or an IP version 4 (IPv4) datagram from the TS packet. Sequentially, the broadcast receiver unit 120 extracts File Delivery over Unidirectional Transport/Asynchronous Layered Coding (FLUTE/ALC) data units and Real-time Transport Protocol (RTP) data units from the datagram. The FLUTE/ALC data units carry an Electronic Service Guide (ESG) and files, and the RTP data units carry video and audio data. That is, the ESG is extracted from the FLUTE/ALC data units.

The display unit 130 provides the user with various information such as menus, input data, function settings, and operation status information in the form of visual image. More particularly, the display unit 130 displays video data of the broadcast data output from the broadcast receiver unit 120 and the control unit 170. The display unit 130 can be implemented with a Liquid Crystal Display (LCD). More particularly, when the display unit 130 is implemented with an LCD supporting a touchscreen function, the display unit 130 may act as a part of the input unit 160.

The smartcard unit 140 can be detachably installed to the mobile terminal 100. The smartcard unit 140 can be a Universal Integrated Circuit Card (UICC) or an Integrated Circuit Card (ICC) adaptor. The smartcard unit 140 can be implemented as a stand-alone device. In this case, the smartcard unit 140 is provided with a storage module and a processing module. The storage module can be implemented with an Electrically Erasable and Programmable Read Only Memory (EEPROM), a Random Access Memory (RAM), a Read Only Memory (ROM) or the like. The processing module can be a Central Processing Unit (CPU) or the like.

The smartcard unit 140 can be a Subscriber Identity Module (SIM), Universal Subscriber Identity Module (USIM), or the like. The smartcard unit 140 also can be implemented as a conventional smart card. In this exemplary embodiment, the mobile device 100 supports the SIM Application Toolkit (SAT) and USIM Application Toolkit (USAT) specified in the 3GPP standards. The smartcard unit 140 can use a "proactive command" and an "envelope command" according to the SAT/USAT specification.

The smartcard unit 140 is provided with an interface for interfacing to the mobile device 100.

More particularly, the smartcard unit 140 may store tokens for use in purchasing the pay broadcast program. The tokens can be stored in various formats. For example, the tokens may be stored in the form of normal files a database, and the like.

In this exemplary embodiment, the tokens are stored in the SIM or USIM file format. The SIM or USIM file system may comprise a Dedicated File (DF), an Elementary File (EF), an Application Dedicated File (ADF) or the like.

A Master File (MF) is the root directory of the file system hierarchy, and a DF is a file containing access conditions or a specific file folder. EF is a file containing access conditions and data, and ADF is the entry point to an application. The tokens can be stored in any of the ADF, DF, and EF formats.

In this exemplary embodiment, the smartcard unit 140 is implemented as an external module such that it can be attached to devices having an appropriate connection interface. In order to use a token provided by means of the smartcard unit 140, the token should pass an authentication test, resulting in a high level of security.

The audio processing unit 150 processes digital audio data supplied by the control unit 170 to output the processed audio data through a speaker (SPK) in the form of audible sound wave and processes analog audio signals input through a microphone (MIC) to supply the processed audio signals to the control unit 170.

The input unit 160 generates key signals corresponding to the user's key inputs and transmits the key signals to the control unit 170. The key signals include user configuration signals and function control signals. The input unit 160 may be provided with a plurality of alphanumeric keys for inputting alphanumeric data and a plurality of function keys for executing various functions of the mobile device 100.

The control unit 170 controls signaling among the radio communication unit 110, broadcast receiver unit 120, display unit 130, smartcard unit 140, audio processing unit 150, and input unit 160. For this purpose, the control unit 170 may include additional function modules. The control unit 170 also may include an access module for accessing the smartcard unit 140 and a reader module for reading the field values of the files stored in the smartcard unit 140.

In a case that the smartcard unit 140 is compliant with the SIM or USIM standard, the control unit 170 is preferably provided with a card interface for interfacing the smartcard unit 140. When the mobile device 100 powers on, the control unit 170 receives various application information and data from the smartcard unit 140, and particular information on the tokens for use in purchasing pay broadcast programs. More particular, the communication between the control unit 170 and the smartcard unit 140 is performed according to the SAT standard.

The mobile device 100 may further include a storage unit such as memory for storing user data and application programs. The mobile device 100 also may include any number of a memory slot for receiving an external storage media such as memory card, a camera module, a data connection port for exchanging data with an external device, a power charging port, a multimedia module such as MP3 module for playing digital audio files and the like.

Although not all the possible modules have been described, it is obvious to those skilled in the art that various application modules can be converged with the mobile terminal.

Until now the internal structure of the mobile device 100 has been described. A broadcast program purchase system using the above structured mobile device 100 is described hereinafter.

FIG. 2 is a schematic diagram illustrating a broadcast program purchase system according to an exemplary embodiment of the present invention.

Referring to FIG. 2, the broadcast purchase system includes a mobile device 100, a billing server 200, and a broadcast server 300. The billing server 200 communicates with the mobile device 100 via a mobile communication network and provides the mobile device 100 with tokens in response to a token request. The billing server 200 performs billing operations in various accounting schemes including pre-paid and post-paid schemes. The pre-paid scheme is one in which the user is charged when the tokens are provided in response to a request by the user. That is, the user purchases the token in the pre-paid scheme. In the post-paid scheme, the user is charged when purchasing a broadcast program.

If it is acknowledged that the mobile device 100 purchases a pay broadcast program via the billing server 200, the broadcast server 300 issues a viewing right to the mobile device 100 such that the user can view the broadcast program using the mobile device 100.

The acquisition of tokens using the mobile device in the above explained broadcast program purchase system is described hereinafter.

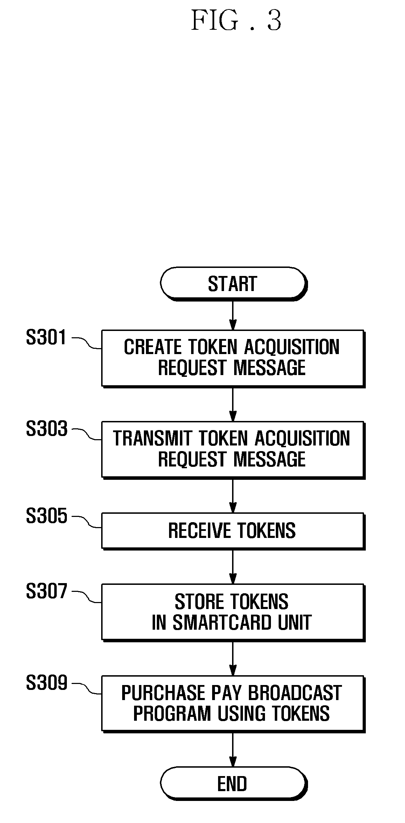

FIG. 3 is a flowchart illustrating a broadcast program purchase method according to an exemplary embodiment of the present invention.

In order to purchase a pay broadcast program, one or more tokens are required. Referring to FIG. 3, in response to a detection of a token acquisition request signal, the control unit 170 of the mobile device 100 creates a token acquisition request message in step S301. The token acquisition request message includes a number of tokens desired, smartcard identity (ID), and payment information.

After creating the token acquisition request message, the control unit 170 transmits the token acquisition request message to the billing server 200 by means of the radio communication unit 110 in step S303.

Upon receiving the token acquisition request message, the billing server 200 transmits one or more tokens in response to the token acquisition request message. In order to distinguish the tokens destined for different mobile devices from each other, it is preferred that each token is provided with a serial number mapped with the smartcard ID.

The control unit 170 receives the one or more tokens transmitted by the billing server 200 by means of the radio communication unit 110 in step S305 and stores the received token within the smartcard unit 140 in step S307.

Consequentially, the control unit 170 performs the pay broadcast program purchase procedure in response to a user request in step S309. The pay broadcast program purchase procedure is described below in more detail.

Since the smartcard unit 140 is detachable, it can be attached to another mobile device for purchasing a pay broadcast program.

The pay broadcast program purchase procedure using the token acquired as above is described hereinafter.

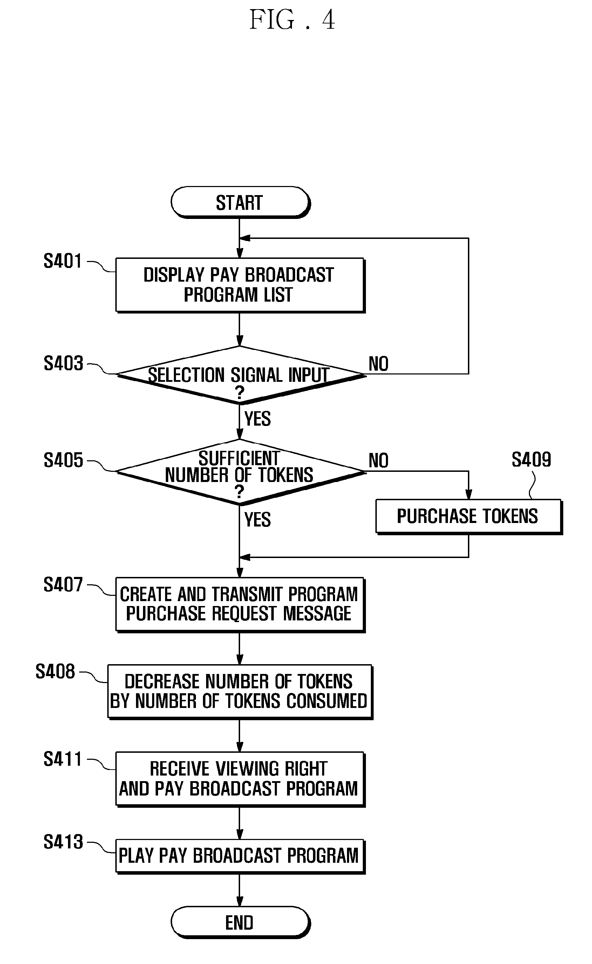

FIG. 4 is a flowchart illustrating a pay broadcast program purchase procedure of FIG. 3.

Referring to FIG. 4, the control unit 170 controls such that a pay broadcast program list is displayed on the display unit 130 in step S401.

The program purchase can be performed by a service channel, a program bundle, or a program. Accordingly, the pay broadcast program list can be presented in the form of at least one of a service channel list, a program bundle list, a program list and the like. The pay broadcast program list also can be provided with detailed information of the programs. Each program item is presented with a number of tokens required for purchase.

While the pay broadcast program list is displayed, the control unit 170 determines whether a program selection signal is input in step S403. If a program selection signal is detected, the control unit 170 scans the smartcard unit 140 to determine whether the stored number of tokens is greater than the required number of tokens for purchasing the selected broadcast program in step S405.

If the stored number of tokens is greater than or equal to the required number of tokens, the control unit 170 creates a program purchase request message and transmits the program purchase request message to the billing server 200 in step S407. In contrast, if the stored number of tokens is less than the required number of tokens, the control unit 170 performs a token acquisition procedure according to a user command and then creates and transmits the program purchase request message in step S409.

After step S407 the control unit 170 decreases the stored number of tokens by the number of tokens consumed for purchasing the selected broadcast program in step S408. The program purchase request message includes a program ID, smartcard ID, serial numbers of the tokens required for purchase and the like.

The billing server 200 records a purchase history with reference to the information included in the program purchase request message. In the case of using the post-paid scheme, the billing server 200 can charge the cost with reference to the purchase history. Next, the billing server 200 transmits the purchase history to the broadcast server 300 such that the mobile device 100 can receive the purchased broadcast program from the broadcast server 300.

The control unit 170 receives a viewing right and paid broadcast program by means of the radio communication unit 110 in step S411 and plays the received broadcast program in step S413.

The pay broadcast program is scrambled before being transmitted by the broadcast server 300. The mobile device 100 can descramble the pay broadcast program using the viewing right. The broadcast server 300 can transmit the viewing right using a Conditional Access System (CAS), Digital Right Management (DRM) method or the like. In the case of using the CAS method, the broadcast server 300 transmits an Entitlement Management Message (EMM) together with the paid broadcast program. In the case of using the DRM, the broadcast server 300 transmits a Rights Object with the paid broadcast program. The control unit 170 controls such that the mobile device 100 plays the broadcast program using the EMM or Rights Object.

As described above, the tokens used for purchasing pay broadcast programs are stored in a smartcard, thereby improving token management efficiency and heightening security. Also, the smartcard unit storing the tokens is implemented as a detachable module such that it can be attached to other devices, resulting in an improvement of utilization.

While the invention has been shown and described with reference to certain exemplary embodiments thereof, it will be understood by those skilled in the art that various changes in form and details may be made therein without departing from the spirit and scope of the invention as defined by the appended claims and their equivalents.

As described above, the broadcast program purchase method and apparatus of exemplary embodiments of the present invention enables storing tokens for use in purchasing pay broadcast programs in a detachable smartcard unit integrating SIM or USIM, resulting in an improvement of token usability.

## Claims

1. A broadcast program purchase method for a mobile device, the method comprising:
acquiring one or more tokens for use in purchasing a pay broadcast program (S301, S303, and S305); and
storing the one or more tokens in a smartcard coupled to a mobile device (S307).

2. The method of claim 1, wherein the acquiring of the one or more tokens comprises:
transmitting a token acquisition request message to a billing server; and (S301 and S303)
receiving the one or more tokens from the billing server in response to the token acquisition request message (S305).

3. The method of claim 1, wherein the storing of the one or more tokens (S307) comprises accumulating the one or more tokens and determining a number of the accumulated tokens.

4. The method of claim 1, further comprising purchasing a pay broadcast program using at least one of the one or more tokens (S309).

5. The method of claim 4, wherein the purchasing of the pay broadcast program (S309) comprises:
transmitting a program purchase request message to the billing server (S407); and
decreasing the number of the accumulated tokens by a number of tokens required for purchasing the pay broadcast program (S408).

6. The method of claim 4, further comprising:
receiving a reception right and purchased broadcast program from a broadcast server (S411); and
reproducing the purchased broadcast program using the reception right (S413).

7. A broadcast program purchase apparatus of a mobile device, the apparatus comprising:
a radio communication unit (110) for transmitting at least one of a token acquisition request message and a program purchase request message to a billing server and for receiving one or more tokens from the billing server;
a smartcard unit (140) for storing the one or more tokens received from the billing server; and
a control unit (170) for controlling transmission of the program purchase request message using at least one of the one or more tokens through the radio communication unit.

8. The apparatus of claim 7, further comprising a broadcast receiver unit (120) for receiving a pay broadcast program and a reception right allowing receipt of the pay broadcast program.

9. The apparatus of claim 7 or 8, wherein the control unit (170) controls reproduction of the pay broadcast program using the reception right.

10. The apparatus of claim 7, wherein the smartcard unit (140) is detachable from the mobile device.

11. The apparatus of claim 7, wherein the smartcard unit (140) stores the tokens accumulatively and decreases a number of tokens by a number of tokens required for purchasing the pay broadcast program.

12. The apparatus of claim 7, wherein the smartcard unit (140) is at least one of a Subscriber Identity Module (SIM) and a Universal Subscriber Identity Module (USIM) and stores the one or more tokens in a file format compliant with the SIM or USIM.
